# EUROPEAN PATENT APPLICATION

(11) **EP 4 650 372 A1**
(43) Date of publication of application: **19.11.2025**
(21) Application number: 25176909.7
(22) Date of filing: 16.05.2025
(51) Int. Cl.: C08B 3/22, C08B 11/20, C08B 13/00

(54) **HYDROXYPROPYL METHYLCELLULOSE ACETATE SUCCINATE AND METHOD FOR PRODUCING SAME**

(30) Priority: 17.05.2024 JP 2024080602
(71) Applicant: SHIN-ETSU CHEMICAL CO., LTD.,, Chiyoda-ku, Tokyo 1000005 (JP)
(72) Inventor: MIKI, Kentaro, Niigata, 9428601 (JP); INADA, Shinnosuke, Tokyo, 1000005 (JP); KITAGUCHI, Taishi, Niigata, 9428601 (JP); KITAMURA, Akira, Niigata, 9428601 (JP); NARITA, Mitsuo, Tokyo, 1000005 (JP)
(74) Representative: Ipsilon

(57) **Abstract**

Provided is an industrial and efficient method for producing hydroxypropyl methylcellulose acetate succinate that exhibits an enhanced dissolution rate into a solvent. This method includes a liquid removal step, a first drying step, and a second drying step, wherein the first drying step involves drying hydroxypropyl methylcellulose acetate succinate under reduced pressure until it reaches a water content above 0% by mass and lower than or equal to 30% by mass while maintaining the product temperature above 0°C and lower than or equal to 25°C.

## Description

### BACKGROUND OF THE INVENTION

### Field of the invention

The present invention relates to hydroxypropyl methylcellulose acetate succinate and a method for producing the same.

### Background art

Hydroxypropyl methylcellulose acetate succinate (hereinafter also referred to as "HPMCAS") is a polymer synthesized by introducing in total four types of substituent groups of methyl groups (-CH₃), hydroxypropyl groups (-CH₂CH(OH)CH₃, acetyl groups (-COCH₃), and succinyl groups (-COC₂H₄COOH) into cellulose, and HPMCAS is widely used for the applications of, for example, solid dispersion for improving the eluting property of poorly soluble drugs, and enteric coating of tablets.

An example of the method for producing solid dispersion using HPMCAS includes a method in which a mixture of a poorly soluble drug and HPMCAS is dissolved in a solvent, and then the solvent is removed by spray drying.

A typical method for forming an enteric coating on a tablet using HPMCAS is a method in which HPMCAS is dissolved in a solvent to prepare a coating liquid, which is then sprayed onto a tablet to form a film on the surface of the tablet.

However, it takes a long time to dissolve HPMCAS in a solvent for using it as a solid dispersion or an enteric coating, and shortening the dissolution time has been a longstanding issue that needs to be addressed to enhance productivity.

As a method for shortening the dissolution time of HPMCAS in a solvent, JP-A-2017-501239 focuses on particle diameter distribution of HPMCAS powder and proposes a method of preparing HPMCAS grains whose fraction of grains having a size of 841 to 1,190 µm is set as 25 wt% or greater.

### SUMMARY OF THE INVENTION

The method described in JP-A-2017-501239, however, leaves room for improving the dissolution rate of the obtained HPMCAS powder in a solvent. This method according to JP-A-2017-501239 uses water in an amount of 12 to 20 times the total weight of the medium used during the esterification reaction process to precipitate HPMCAS particles from the reaction solution, thus leading to the issue of producing a significant amount of drainage. Further, this method employs HPMCAS powder whose fraction of grains having a size of 841 to 1,190 µm accounts for 25 wt% or more, which is large and therefore makes it difficult to extract impurities from inside the HPMCAS particles in the washing step of the HPMCAS particles that are precipitated in water, and possibly requires a long time for washing, thus leaving room for improvement.

The present invention has been made in view of these circumstances, and it is an object of the present invention to provide an industrial and efficient method for producing HPMCAS that exhibits an enhanced dissolution rate into a solvent.

The inventors of the present invention diligently conducted studies to solve the aforementioned problems, and have found a method for producing HPMCAS having favorable solubility and an enhanced dissolution rate into a solvent in an industrial and efficient manner without being relied upon a precipitation method which is complex and inefficient, the method including a first drying step of drying a liquid-removed HPMCAS under reduced pressure while maintaining the product temperature above 0°C and lower than or equal to 25°C to obtain a first dried HPMCAS having a water content of 30% by mass; and a second drying step of further drying the first dried HPMCAS to obtain HPMCAS, thus completing the invention.

The present invention provides hydroxypropyl methylcellulose acetate succinate and a method for producing the hydroxypropyl methylcellulose acetate succinate as defined below.
<1> A method for producing hydroxypropyl methylcellulose acetate succinate including:
   a liquid removal step of
      allowing hydroxypropyl methylcellulose, an acetylating agent, and a succinoylating agent to react with each other in the presence of a catalyst to produce a reaction solution,
      mixing water with the reaction solution to obtain a suspension of hydroxypropyl methylcellulose acetate succinate, and
      removing liquid from the suspension of hydroxypropyl methylcellulose acetate succinate to obtain liquid-removed hydroxypropyl methylcellulose acetate succinate;
   a first drying step of drying the liquid-removed hydroxypropyl methylcellulose acetate succinate under reduced pressure until it reaches a water content above 0% by mass and lower than or equal to 30% by mass while maintaining the product temperature above 0°C and lower than or equal to 25°C to obtain first dried hydroxypropyl methylcellulose acetate succinate; and
   a second drying step of further drying the first dried hydroxypropyl methylcellulose acetate succinate to obtain hydroxypropyl methylcellulose acetate succinate.
<2> The method according to <1>, wherein the first drying step is performed inside a dryer under a pressure of 0.5 to 3 kPa abs.
<3> The method for producing hydroxypropyl methylcellulose acetate succinate according to <1> or <2>, wherein the first drying step is performed inside a dryer whose heating temperature is set at 50 to 120°C.
<4> The method according to any one of <1> to <3>, wherein the first drying step is performed using a dryer selected from a container rotary dryer, an internally stirring dryer, and a vibration dryer.
<5> The method according to any one of <1> to <4>, wherein the liquid-removed hydroxypropyl methylcellulose acetate succinate immediately before being subjected to the first drying step has a water content of 40 to 80% by mass.
<6> The method according to any one of <1> to <5>, wherein the hydroxypropyl methylcellulose acetate succinate has a water content above 0% by mass and lower than or equal to 5% by mass.
<7> The method according to any one of <1> to <6>, wherein the hydroxypropyl methylcellulose acetate succinate has a product temperature of 60 to 120°C when the second drying step is completed.
<8> A hydroxypropyl methylcellulose acetate succinate comprising pores each having a diameter of 0.01 to 3.0 µm, wherein said pores have a pore volume of 0.5 to 2.0 mL/g as measured by mercury porosimetry.

The present invention allows the production of HPMCAS with an enhanced dissolution rate into a solvent in an industrial and efficient manner. The HPMCAS obtained by this production method may be used to shorten its dissolution time for dissolving HPMCAS in a solvent, thus allowing the solution to be prepared quickly.

### DETAILED DESCRIPTION OF THE INVENTION

The method for producing HPMCAS according to the present invention essentially includes a liquid removal step, a first drying step, and a second drying step. The method for producing HPMCAS according to the present invention may further include a washing step and/or a preliminary liquid removal step as necessary.

### [Liquid removal step]

In the liquid removal step, hydroxypropyl methylcellulose is first reacted with an acetylating agent and a succinoylating agent in the presence of a catalyst to produce a reaction solution (esterification reaction step), and then the reaction solution is mixed with water to produce a suspension of hydroxypropyl methylcellulose acetate succinate (precipitation step), followed by removing liquid from the suspension of hydroxypropyl methylcellulose acetate succinate to obtain liquid-removed hydroxypropyl methylcellulose acetate succinate.

A method for obtaining hydroxypropyl methylcellulose (hereafter also referred to as "HPMC") which is a raw material of HPMCAS will be explained below.

HPMC obtained by a known method or the one that is commercially available may be used. HPMC may, for example, be prepared in such a manner where a solution of an alkali metal hydroxide such as sodium hydroxide or potassium hydroxide is at first brought into contact with, for example, a sheet-, chip- or powder-like pulp to form an alkali cellulose, followed by adding an etherifying agent such as methyl chloride or propylene oxide to perform the etherifying reaction.

The solution of alkali metal hydroxide for use in preparing the alkali cellulose is not particularly limited so long as an alkali cellulose of desired composition may be obtained, but it is preferred in terms of economical perspective that the solution be a solution of sodium hydroxide or potassium hydroxide. It is preferred in terms of obtaining HPMC with a small number of insoluble fibers that the alkali metal hydroxide solution have a concentration of 23 to 60% by mass, more preferably 35 to 55% by mass.

After producing the alkali cellulose, a conventional method may be used to add an etherifying agent such as methyl chloride or propylene oxide to the alkali cellulose to perform an etherification reaction to thereby obtain HPMC.

The degree of substitution (DS) of the methoxy groups of HPMC is preferably 1.10 to 2.20, more preferably 1.40 to 2.00, and even more preferably 1.70 to 2.00 in terms of obtaining HPMC with a small number of insoluble fibers. The molar substitution (MS) of hydroxypropoxy groups of HPMC is preferably 0.10 to 1.00, more preferably 0.20 to 0.60, and even more preferably 0.20 to 0.30, in terms of obtaining HPMC with a small number of insoluble fibers.

The term "insoluble fibers" as used herein refers to water-insoluble parts of the fibers that are contained in HPMC. HPMC exhibits water solubility after having the hydroxyl groups in cellulose partially etherified, thereby weakening the hydrogen bonds in the intra-molecule and inter-molecule of cellulose. Since it is industrially difficult to perform etherification in a perfectly uniform manner, HPMC may contain parts that are insoluble in water, i.e., the insoluble fibers, due to an insufficient degree of substitution of ether groups or an ununiform substitution of ether groups. If HPMCAS contains a large number of insoluble fibers in the final product, the yield of an enteric coating preparation will decrease due to an ununiform enteric film, or productivity will decline as filter clogging will frequently occur in a filtration step of the coating solution; it is therefore preferred that HPMC as a raw material of HPMCAS have a small number of insoluble fibers. The number of insoluble fibers may be calculated by, for example, analyzing the HPMC aqueous solution with the aid of a device such as a Coulter counter.

It is noted that with respect to HMPC, the DS of methoxy groups as used herein refers to a degree of substitution of the methoxy groups, which is an average number of methoxy groups per number of anhydroglucose unit, and the MS of hydroxypropoxy groups refers to a molar substitution of the hydroxypropoxy groups, which is an average number of moles of hydroxypropoxy groups per mole of anhydroglucose. The DS of methoxy groups and the MS of hydroxypropoxy groups of HPMC may be determined based on the converted values of the values obtained by the respective measurements performed in accordance with the Japanese Pharmacopoeia 18th Edition.

It is preferred in terms of kneadability in performing the esterification reaction that the viscosity at 20°C of a 2% by mass aqueous solution of HPMC be 2.2 to 7.2 mPa·s, more preferably 3.0 to 3.5 mPa·s.

The viscosity at 20°C of a 2% by mass aqueous solution of HPMC may be determined in accordance with the viscosity measurement by capillary tube viscometer as stipulated in the Japanese Pharmacopoeia, 18th Edition.

It is preferred in terms of economical perspective that the catalyst for use in the esterification reaction step be an alkali metal carboxylate such as sodium acetate. The amount of catalyst may be suitably selected in any way based on the degree of substitution of the resultant HPMCAS but it is preferred in terms of reaction efficiency that the catalyst be contained in such an amount that a molar ratio thereof to the raw material HPMC is 0.1 to 1.5, more preferably 0.6 to 1.1.

Examples of the acetylating agent for use as an esterification agent in the esterification reaction step include acetic anhydride and acetyl chloride, among which acetic anhydride is preferred in terms of economical perspective.

The acetylating agent may be contained in any amount which is not particularly limited so long as it achieves a desired degree of substitution of HPMCAS but it is preferred in terms of reaction efficiency that the acetylating agent be contained in such an amount that a molar ratio thereof to the raw material HPMC is 0.1 to 1.5, more preferably 0.8 to 1.3.

Examples of the succinoylating agent for use as an esterification agent in the esterification reaction step include succinic anhydride and succinyl chloride, among which succinic anhydride is preferred in terms of economical perspective.

The succinoylating agent may be contained in any amount which is not particularly limited so long as it achieves a desired degree of substitution of HPMCAS but it is preferred in terms of reaction efficiency that the succinoylating agent be contained in such an amount that a molar ratio thereof to the raw material HPMC is 0.1 to 1.0, more preferably 0.3 to 0.5.

The esterification reaction step may be carried out in the presence of a solvent which is preferably the one capable of dissolving HPMC, an esterification agent, and a catalyst. Examples of such solvent include acetic acid, propionic acid, and butyric acid, among which acetic acid is preferred in terms of economical perspective. It is preferred in terms of reaction rate that the solvent be used in such an amount that a mass ratio thereof to the mass of the HPMC is 1.0 to 3.0, more preferably 1.2 to 2.0, and even more preferably 1.5 to 1.8.

Examples of the reactor to be used for esterification reaction in the esterification reaction step include, for example, a twin-shaft mixer capable of mixing a high-viscosity fluid to make a uniform mixture. Specifically, there may be used a commercially marketed mixer such as the one called under the name of a kneader or an internal mixer.

It is preferred in terms of reaction speed or viscosity increment that the reaction temperature in the esterification reaction step be 60 to 100°C, more preferably 80 to 90°C. It is also preferred in terms of obtaining HPMCAS having a desired degree of substitution that the reaction time of the esterification reaction step be 1 to 8 hours, more preferably 3 to 6 hours.

After the esterification reaction is over, water may be added to the reaction solution of HPMCAS for the purpose of treating the unreacted acetylating agent and succinoylating agent (the mixing treatment with water after performing the esterification reaction is also referred to as "post-treatment"). The amount of water to be added into the reaction solution in the esterification reaction step for the purpose of post-treatment is in such an amount that a mass ratio thereof to the mass of the HPMC is preferably 0.8 to 1.5, more preferably 1.0 to 1.3.

The following describes a process in which the reaction solution obtained from the esterification reaction is mixed with water to precipitate crude HPMCAS for preparing an HPMCAS suspension.

It is preferred, in terms of controlling the particle diameter of the HPMCAS particles in the HPMCAS suspension, that water be mixed in the precipitation step with the reaction solution in such an amount that a mass ratio thereof to the mass of HPMC used in the esterification reaction is 3.0 to 50.0, more preferably 5.0 to 20.0.

It is also preferred, in terms of controlling the particle diameter of the HPMCAS particles in the HPMCAS suspension, that the water mixed with the reaction solution in the precipitation step have a temperature of 0 to 50°C, more preferably 5 to 30°C.

Further, it is also preferred, in terms of controlling the particle diameter of the HPMCAS particles in the HPMCAS suspension, that the reaction solution immediately before being mixed with water have a temperature of 10 to 80°C, more preferably of 10 to 50°C.

The resultant HPMCAS suspension may contain remaining impurities including salts, free acetic acid, and free succinic acid. For this reason, a washing step may be introduced as necessary between the precipitation step and the liquid removal step, where, in the washing step, crude HPMCAS in the HPMCAS suspension obtained in the precipitation step is washed to give an HPMCAS suspension to be used in the liquid removal step.

The HPMCAS suspension may be washed by a method of, for example, partially removing water from the HPMCAS suspension using a technique such as filtration, and then suspending the HPMCAS again into a clean solvent. In the washing step, partial removal of water from the HPMCAS suspension using, for example, filtration and resuspension into a solvent may be repeated multiple times.

Examples of the solvent for use in washing include water.

This washing step typically involves washing crude HPMCAS by, for example, water using a filtration apparatus such as a batch-type stirring filtration apparatus, a continuous type rotary pressure filtration apparatus, a continuous type horizontal vacuum filtration apparatus, a horizontal table filtration apparatus, or a horizontal belt filtration apparatus.

The liquid removal step will be explained below.

In the liquid removal step, the HPMCP suspension is subjected to liquid removal using a dehydrator between the washing step and the drying step or, when the washing step is not performed, between the precipitation step and the drying step for reducing water content of the HPMCAS suspension or for reducing the load of drying to thereby obtain liquid-removed HPMCAS.

Examples of such machine for removing liquid from the HPMCAS suspension include dehydrators such as a pressure dehydrator, a vacuum dehydrator, a centrifugal filtration dehydrator, a compression-type dehydrator and a decanter-type centrifugal separator.

It is preferred in terms of obtaining HPMCAS having a favorable dissolution rate into a solvent that the liquid-removed HPMCAS obtained after the liquid removal step have a water content of 40 to 80% by mass, more preferably of 45 to 75% by mass, and most preferably of 50 to 70% by mass.

The water content of the liquid-removed HPMCAS may be determined in accordance with the procedure described in "Loss on Drying Test" under "2. Physical Methods" in "General Tests" of the Japanese Pharmacopoeia 18th Edition. More specifically, the water content of HPMCAS is defined as {(Total mass of HPMCAS - Absolute dry mass of HPMCAS)/(Total mass of HPMCAS)} × 100%, wherein the term "Total mass of HPMCAS" refers to the mass of HPMCAS which is precisely determined in accordance with the procedure described in "Loss on Drying Test" in the Japanese Pharmacopoeia 18th Edition. Further, the term "Absolute dry mass of HPMCAS" refers to the mass of HPMCAS which was dried in accordance with the procedure described in "Loss on Drying Test" in the Japanese Pharmacopoeia 18th Edition.

Here, when determining the "water content of the liquid-removed HPMCAS", the "Water content of the liquid-removed HPMCAS" may be determined or calculated in accordance with the above-defined formula in such a manner that the term "HPMCAS" is replaced with the term "liquid-removed HPMCAS". The water content of HPMCAS in each step, including the water content of the first dried HPMCAS described below, may also be determined in a similar manner.

It is also preferred in terms of controlling the product temperature in a subsequent first drying step that the liquid-removed HPMCAS subjected to the first drying step have a temperature above 0°C and 35°C or lower, more preferably 5 to 30°C, even more preferably 10 to 25°C, and most preferably 12 to 20°C.

### [Drying step]

In the drying step, the liquid-removed HPMCAS obtained in the liquid removal step is dried under reduced pressure until it reaches the intended water content (e.g., 0.1 to 5.0% by mass). The drying step is comprised of a first drying step of obtaining a first dried HPMCAS and a second drying step of further drying the first dried HPMCAS to obtain HPMCAS.

### [First drying step]

In the first drying step, the liquid-removed HPMCAS obtained in the liquid removal step is dried under reduced pressure to obtain a first dried HPMCAS. The term "drying under reduced pressure" (or similar terms) as used herein refers to a technique in which air is evacuated from a dryer using, for example, a vacuum pump to maintain pressure inside the dryer below atmospheric levels to perform drying.

The product temperature of HPMCAS in the first drying step is set at higher than 0 °C and lower than or equal to 25°C, preferably at 5 to 23°C, more preferably at 10 to 20°C, and even more preferably at 12 to 19°C in terms of drying rate and obtaining HPMCAS having a favorable dissolution rate into a solvent. The product temperature of 0°C or lower risks moisture freezing within the HPMCAS, which slows the drying speed. Meanwhile, the product temperature higher than 25°C may result in a reduced pore volume of pores in the HPMCAS having a diameter of 0.01 to 3.0 µm as measured by mercury porosimetry, and therefore fail to obtain HPMCAS having a favorable dissolution rate into a solvent.

Examples of dryers for use in the first drying step include a container rotary dryer, an internally stirring dryer, a vibration dryer, a drum dryer, a belt dryer, and a shelf drier. Of these, a container rotary dryer, an internally stirring dryer, and a vibration dryer are particularly preferred. A fluid-bed dryer is not used in the first drying step of the present invention.

The dryer for use therein may be of a batch type or a continuous type. In the first drying step, a plurality of dryers may also be used in combination.

It is preferred in terms of controlling the product temperature of HPMCAS and the drying time that the heating temperature in the first drying step be 50 to 120°C, more preferably 60 to 110°C, and most preferably 70 to 100°C. The term "heating temperature" as used herein refers to the temperature of a medium (water or vapor) that runs through a jacket of a dryer when the jacket is used for heating; or to the temperature of a hot-water bath when the dryer is immersed in the hot-water bath to perform heating; or to the temperature of an electric heater when the heater is used to perform heating.

The dryer used in the first drying step may have any internal pressure which is not particularly limited, provided it is capable of controlling the product temperature of HPMCAS in the first drying step. However, it is preferred that the pressure be 0.5 to 3.0 kPa abs., more preferably 0.6 to 2.8 kPa abs., and even more preferably 0.65 to 2.3 kPa abs.

It is preferred that heating in the first drying step be initiated after the dryer has reached an internal pressure within the above pressure range. Heating initiated before the dryer has reached an internal pressure within the above pressure range may result in an abrupt increase in the HPMCAS product temperature. This not only leads to a failure in obtaining HPMCAS with a favorable dissolution rate into a solvent but also causes a vast amount of substance to adhere to the dryer.

The duration of the first drying step is not particularly limited but it is preferred that the duration be 5 to 300 minutes, more preferably 10 to 200 minutes, and even more preferably 15 to 100 minutes.

The first dried HPMCAS obtained in the first drying step has a water content exceeding 0% by mass and 30% by mass or less, preferably 5 to 30% by mass, and more preferably 10 to 30% by mass in terms of obtaining HPMCAS with a favorable dissolution rate into a solvent. The first dried HPMCAS having a water content larger than 30% by mass results in a reduced pore volume of pores having a diameter of 0.01 to 3.0 µm as measured by mercury porosimetry in the HPMCAS, and therefore fail to obtain HPMCAS having a favorable dissolution rate into a solvent.

### [Second drying step]

In the second drying step, a first dried HPMCAS obtained in the first drying step is further dried to obtain HPMCAS. The drying in the second drying step may be performed under reduced pressure in a manner similar to the first drying step or a method other than the reduced-pressure drying may be used for drying.

In the second drying step, the product temperature of HPMCAS increases as drying progresses. It is preferred in terms of removing water content and volatile impurities in HPMCAS that the HPMCAS has a product temperature of 60 to 120°C, more preferably of 65 to 115°C, and even more preferably of 70 to 110°C when the second drying step is completed.

Examples of dryers for performing reduced-pressure drying in the second drying step include a container rotary dryer, an internally stirring dryer, a vibration dryer, a drum dryer, a belt dryer, and a shelf drier, while those used for performing fluidized bed drying include a fluid-bed dryer. Of these, a container rotary dryer, an internally stirring dryer, and a vibration dryer are particularly preferred. The dryer for use therein may be of a batch type or a continuous type. The apparatus used in the second drying step may be the one same as that used in the first drying step, or the one different from the one used in the first drying step may be used. In the second drying step, a plurality of dryers may also be used in combination.

It is preferred in terms of controlling the product temperature of HPMCAS and drying time that the heating temperature in the second drying step be 65 to 140°C, even more preferably 70 to 130°C, and most preferably 75 to 120°C.

The dryer used for performing reduced-pressure drying in the second drying step may use any internal pressure which is not particularly limited, provided it is capable of controlling the product temperature of HPMCAS when the second drying step is completed. However, it is preferred that the pressure be 0.5 to 3.0 kPa abs., more preferably 0.6 to 2.8 kPa abs., and even more preferably 0.65 to 2.4 kPa abs.

The duration of the second drying step is not particularly limited but it is preferred that the duration be 5 to 200 minutes, more preferably 8 to 100 minutes, and even more preferably 10 to 50 minutes.

The HPMCAS obtained in the second drying step has a water content of preferably exceeding 0% by mass and 5% by mass or less, more preferably of 0.1 to 4% by mass, and even more preferably of 0.2 to 3% by mass.

### [hydroxypropyl methylcellulose acetate succinate]

The degree of substitution of HPMCAS, as obtained by the method of the present invention, will be explained.

The DS of methoxy groups of HPMCAS is preferably 1.10 to 2.20, more preferably 1.40 to 2.00, and even more preferably 1.70 to 2.00.

The MS of hydroxypropoxy groups of HPMCAS is preferably 0.10 to 1.00, more preferably 0.20 to 0.60, and even more preferably 0.20 to 0.30.

The DS of acetyl groups of HPMCAS is preferably 0.10 to 2.50, more preferably 0.10 to 1.00, and even more preferably 0.20 to 0.80.

The DS of succinyl groups of HPMCAS is preferably 0.10 to 2.50, more preferably 0.10 to 1.00, and even more preferably 0.10 to 0.60.

It is preferred that the ratio of the DS of acetyl groups to the DS of succinyl groups in HPMCAS (acetyl groups/succinyl groups) be 0.50 to 4.00, more preferably 0.80 to 3.70, and even more preferably 0.80 to 2.40.

The DSs of methoxy groups, acetyl groups, and succinyl groups of HPMCAS represent the degrees of substitutions, and refer to the average numbers of the methoxy groups, acetyl groups and succinyl groups, respectively, per number of anhydroglucose unit. The MS of hydroxypropoxy groups of HPMCAS represents a molar substitution of hydroxypropoxy groups, and refers to the average mole number of hydroxypropoxy groups per 1 mol of anhydroglucose.

The DSs of methoxy groups, acetyl groups, and succinyl groups of HPMCAS, and the MS of hydroxypropoxy groups may be calculated by converting the values obtained in accordance with the method in the monographs "Hypromellose acetate ester succinate ester" of the Japanese Pharmacopoeia 18th Edition.

The pore volume of pores of HPMCAS having a diameter of 0.01 to 3.0 µm as measured by mercury porosimetry is preferably 0.5 to 2.0 mL/g, more preferably 0.6 to 2.0m L/g, and even more preferably 0.8 to 1.4 mL/g. The pore volume of pores having a diameter of 0.01 to 3.0 µm as measured by mercury porosimetry below 0.5 mL/g may slow the dissolution rate of HPMCAS into a solvent. The pore volume of pores having a diameter of 0.01 to 3.0 µm as measured by mercury porosimetry is preferably 2.0 mL/g or less although the upper limit of the pore volume is not particularly limited.

The pore volume of pores having a diameter of 0.01 to 3.0 µm as measured by mercury porosimetry can be measured by using, as a measuring and analyzing apparatus, a mercury intrusion porosimeter (for example, AutoPore V 9020 (pore size distribution analysis instrument) manufactured by Micromeritics Instrument Corporation) and subjecting about 0.05 g of a sample in a standard cell to measurement under the initial mercury pressure of 4 kPa, and then calculating the pore volume of pores having a diameter of 0.01 to 3.0 µm.

The HPMCAS obtained by the production method according to the present invention exhibits an enhanced dissolution rate into a solvent and have favorable solubility, which allows the HPMCAS to be suitably used for preparing solid dispersion for improving the solubility of poorly soluble drugs, and for enteric coating of a tablet.

Examples of the solvent for dissolving HPMCAS which is used for preparing a solution for enteric coating (coating composition) include: a mixed solution of water and an alcohol, such as methanol, ethanol, and isopropanol, with a weight ratio of 2 to 4:6 to 8 (or from 1:1.5 to 1:4); and an aqueous ammonia solution having a concentration of 0.01 to 1.0% by mass.

In one of the embodiments in which an aqueous ammonia solution is used as the solvent, the HPMCAS powder is dispersed in water at ambient temperature, and then an aqueous ammonia (for example, an ammonia concentration of 5 to 30% by weight) is added thereinto in an amount required for neutralizing the carboxyl groups in the HPMCAS, which is dissolved with stirring. It is preferred in terms of solubility of HPMCAS and acid resistance of a solid preparation coated with the coating composition that the ammonia to be added be in an amount of 70 to 120%, more preferably 80 to 110%, and even more preferably 95 to 105% relative to the amount of the carboxyl groups.

Examples of solvents for dissolving HPMCAS to prepare a spray drying solution include acetone, methanol, ethanol, isopropanol, methyl acetate, ethyl acetate, tetrahydrofuran, dichloromethane, and mixtures thereof.

It is preferred in terms of solubility into a solvent and fluidity of powder that the HPMCAS have a loose bulk density of 0.20 to 0.34 g/cm³, more preferably of 0.21 to 0.33 g/cm³. The term "Loose bulk density" refers to a bulk density in a loosely packed state, and is measured by uniformly supplying a sample through a 24-mesh sieve into a cylindrical container having a diameter of 5.03 cm and a height of 5.03 cm (volume: 100 ml) from 23 cm above the cylindrical container, and leveling the supplied sample at the top face of the container for weighing.

It is preferred in terms of solubility into a solvent and fluidity of powder that the HPMCAS have a tapped bulk density of 0.20 to 0.36 g/cm³, more preferably of 0.22 to 0.32 g/cm³. The term "tapped bulk density" refers to a bulk density in the state where a sample is closely packed by tapping. The term "tapping" refers to an operation in which a cylindrical container filled with a sample is repeatedly dropped from a predetermined height to apply a light impact to the bottom of the container, thereby closely packing the sample in the container. Specifically, as is the case of measuring the "loose bulk density", a sample is supplied into the cylindrical container, and the supplied sample is leveled at the top face of the container for weighing, and then the cylindrical container is capped at the top with a cap, after which the cap is filled with the sample up to the upper edge of the cap, and subjected to 180 times of tapping from a tap height of 1.8 cm. After the tapping has been completed, the cap is removed from the container, and then the sample is leveled at the top face of the container for weighing. The bulk density of this state is determined as the tapped bulk density.

A powder tester manufactured by Hosokawa Micron Corporation may be used for measuring the "loose bulk density" and the "tapped bulk density".

It is preferred in terms of fluidity of powder that the degree of compression of HPMCAS be 0 to 12%, more preferably 2 to 10%, and even more preferably 5 to 10%.

The degree of compression can be calculated from a formula defined as: Degree of compression (%) = {(Tapped bulk density - Loose bulk density)/Tapped bulk density} × 100.

It is preferred in terms of dissolution rate of HPMCAS into a solvent and washability in the process of producing HPMCAS that the HPMCAS have an average particle diameter of 100 to 1000 µm, more preferably of 200 to 800 µm, even more preferably of 250 to 600 µm, and particularly preferably of 300 to 540 µm.

The average particle diameter of HPMCAS can be measured by the dry sieving test as set forth in JIS Z8815.

The average value of a ratio (L/D) of the maximum diameter (L) to the minimum diameter (D) of HPMCAS is preferably above 1.0 and less than 2.0, more preferably 1.1 to 1.8. The L/D of 2.0 or higher deteriorates the powder's fluidity, making the weighing and placement of HPMCAS into a container for solution preparation difficult to handle.

The ratio of the maximum diameter (L) to the minimum diameter (D) of HPMCAS can be measured and calculated as follows. A digital microscope "VHX-2000" manufactured by KEYENCE CORPORATION can be used to disperse 10 mg of HPMCAS powder in a φ90 × 15 petri dish, and measure the maximum diameter (L) and the minimum diameter (D) of each particle at 50× magnification to obtain an L/D ratio of each particle based on its maximum diameter (L) and minimum diameter (D), wherein the number of particles measured by one measurement is set as 30 or more and such a measurement is performed 10 times or more so that an average of 300 or more particles in total is used to determine the average L/D ratio of the powder.

### WORKING EXAMPLES

The present invention is described in detail hereunder with reference to working and comparative examples; the present invention shall not be limited in any way to the following working examples.

The dissolution rate of HPMCAS in a solvent was determined based on the dissolution time calculated using the method described below. The average particle diameter of HPMCAS was determined using the method described below. The above-explained methods were used to determine the water content, degree of substitution, pore volume of pores having a diameter of 0.01 to 3.0 µm as measured by mercury porosimetry, loose and tapped bulk densities, and the ratio (L/D) of the maximum diameter (L) to the minimum diameter (D) of HPMCAS. Further, the above-explained methods were used to calculate degrees of compression based on the loose bulk density and the tapped bulk density. The conditions for producing HPMCAS of Working Examples and Comparative Examples are as shown in Table 1, while physical properties of HPMCAS obtained in Working Examples and Comparative Examples are as shown in Table 2.

### <Dissolution time of HPMCAS in solvent>

3.0 g of HPMCAS was accurately weighed into a CC27 measurement cup (CC27/T200/AL, a cylindrical aluminum container having a diameter of 29 mm and a height of 68 mm, manufactured by Anton Paar GmbH)) of a rheometer MCR 301 (manufactured by Anton Paar GmbH), and then a distilled water of 25°C was added thereinto so that the solution has a final HPMCAS concentration of 10% by mass, and the mixture was thoroughly mixed with stirring by using a blade-type measurement jig (ST24-2D/2V/2V-30 manufactured by Anton Paar GmbH) to allow the HPMCAS to be completely dispersed in the distilled water. The measurement cup and the blade-type measurement jig were set up in the apparatus, and the dispersion was stirred at 400 rpm for 2 minutes while the temperature thereof was controlled at 25°C. After 2 minutes, a 10% aqueous ammonia solution required to neutralize 100% of the carboxyl groups in the HPMCAS was added thereinto while continuing to maintain the temperature at 25°C and stirring at 400 rpm. The moment at which the 10% aqueous ammonia solution was added was designated as time zero (0 min), from which torque measurements were recorded every minute for 120 minutes. The maximum torque value observed during this period of 120 minutes was identified, and the dissolution time was defined as the time point at which the torque reached 99% of this maximum torque value of 120 minutes.

### <Average particle diameter of HPMCAS>

50 g of HPMCAS (conditioned at 40°C and 75% humidity to have a water content of 5 to 6% by mass) was supplied to a Ro-Tap sieve shaking machine (manufactured by TANAKA TEC CORPORATION) with 8 sieves having an internal diameter of 200 mm and opening sizes of 1000 µm, 710 µm, 500 µm, 355 µm, 250 µm, 180 µm, 150 µm and 106 µm arranged in this order from top to bottom, and was subjected to sieving under the conditions at a shaking speed of 250 rpm, a hammer blow count of 67 times per minute, and a shaking time of 20 minutes. After the sieving was completed, the samples on the respective sieves were weighed to calculate the cumulative mass fractions (%) on sieves. Specifically, when the cumulative mass fractions on sieves (%) of the respective sieve opening sizes are plotted against the sieve opening sizes (µm), where the horizontal axis represents the sieve opening size (µm) and the vertical axis represents the cumulative mass fraction (%) on sieves, the average particle diameter of HPMCAS particles is determined as the value of sieve opening size at the intersection between the line of the 50% the cumulative mass fraction on sieves and a straight line connecting the two plotted points sandwiching the line of the 50% cumulative mass fraction on sieves.

### Working Example 1

Here, 1376 g of glacial acetic acid was weighed and put into a 5L horizontal kneader reactor (model PNV-5T by IRIE SHOKAI Co., Ltd.) equipped with a twin-shaft stirring blade (Z-type stirring blade for PNV-5T, material SUS316L, by IRIE SHOKAI Co., Ltd.). Next, there were added 860 g of HPMC whose DS of methoxy groups was 1.88, whose MS of hydroxypropoxy groups was 0.24, and whose 2% by mass aqueous solution had a viscosity of 3.2 mPa·s at 20°C; 495.4 g of acetic anhydride; 262.3 g of succinic anhydride; and 415.0 g of sodium acetate to cause an esterification reaction for 5 hours at 85°C to obtain a reaction solution.

963.2g of water was added and mixed into the resultant reaction solution to obtain a post-treated reaction solution.

Water at 20°C was gradually added to the post-treated reaction solution (35°C) in an amount 3.0 times the mass of the post-treated reaction solution, thus resulting in a suspension with precipitated HPMCAS. The precipitated HPMCAS was then filtrated on an 80-mesh sieve to obtain a crude HPMCAS.

The resultant crude HPMCAS was resuspended in 20°C water whose amount was 10 times the mass of the raw material HPMC, and the mixture was stirred for 10 minutes followed by filtrating the stirred product on an 80-mesh sieve. This operation involving resuspension, stirring, and filtration was repeated 5 times to obtain washed HPMCAS.

The washed HPMCAS was resuspended in 20°C water whose amount was 10 times the mass of the raw material HPMC, and then was subjected to liquid removal by using a centrifugal filtration dehydrator (upper discharge type centrifugal separator, type H-130A, manufactured by KOKUSAN Co., Ltd.) at a centrifugal effect of 600 G to obtain liquid-removed HPMCAS-1. The liquid-removed HPMCAS had a water content of 67% by mass.

400 g of the liquid-removed HPMCAS (with a water content of 67% by mass) was placed into a 1L flask, and the pressure inside the flask was reduced to 2 kPa abs. using a pump.

The flask was immersed in a 90°C hot water bath and rotated at 30 rpm while keeping the pressure inside the flask at 2 kPa abs to initiate the first drying step (using a container rotary dryer). The product temperature was maintained at 20°C for 35 minutes from the onset of the first drying step. The product temperature began to rise from its initial 20°C after 35 minutes from the onset of the first drying step, and 40 minutes later, the product temperature reached 25°C at which the first drying step was completed. An independently conducted test showed that the HPMCAS immediately when the first drying step was completed had a water content of 27% by mass. The drying duration of the first drying step was 40 minutes.

Subsequently, the second drying step was initiated in the same flask while maintaining the same conditions as the first drying step with respect to the internal pressure within the flask, hot water bath temperature, and flask rotation speed. The product temperature at the start of the second drying step was 25°C from which the product temperature increased to 80°C 18 minutes after the onset of the second drying step. The rotation of the flask was stopped, and the flask was removed from the hot water bath. Nitrogen gas was introduced into the flask to bring the internal pressure back to atmospheric pressure, and 125 g of HPMCAS was collected from the flask. The drying duration of the second drying step was 18 minutes.

The ratio (L/D) of the maximum diameter (L) to the minimum diameter (D) of the resultant HPMCAS was measured to be 1.7.

### Working examples 2 to 4

HPMCAS was obtained under the same conditions as those of Working Example 1 except that the pressure and product temperature in the first drying step and the pressure in the second drying step were changed to those indicated in Table 1.

### Working Example 5

HPMCAS was obtained using the same procedures as those of Working Example 3 except that the amount of acetic anhydride was changed to 436 g, the amount of succinic anhydride was changed to 163 g, and the amount of sodium acetate was changed to 376 g in the esterification reaction.

### Comparative Example 1

400 g of the liquid-removed HPMCAS (with water content of 67% by mass) was placed into a fluid-bed dryer to be dried at an inlet air temperature of 80°C. The HPMCAS maintained a product temperature of 33°C for 30 minutes after the onset of the first drying step. In the first drying step, the first drying step was completed once the HPMCAS reached a water content of 30% by mass. After that, the second drying step was performed at an inlet air temperature of 80°C until the product temperature reached 75°C to obtain HPMCAS.

### Comparative Example 2

HPMCAS was obtained under the same conditions as those of Working Example 1 except that the pressure and product temperature in the first drying step and the pressure in the second drying step were changed to those indicated in Table 1. In the first drying step, the first drying step was completed once the HPMCAS reached a water content of 30% by mass.

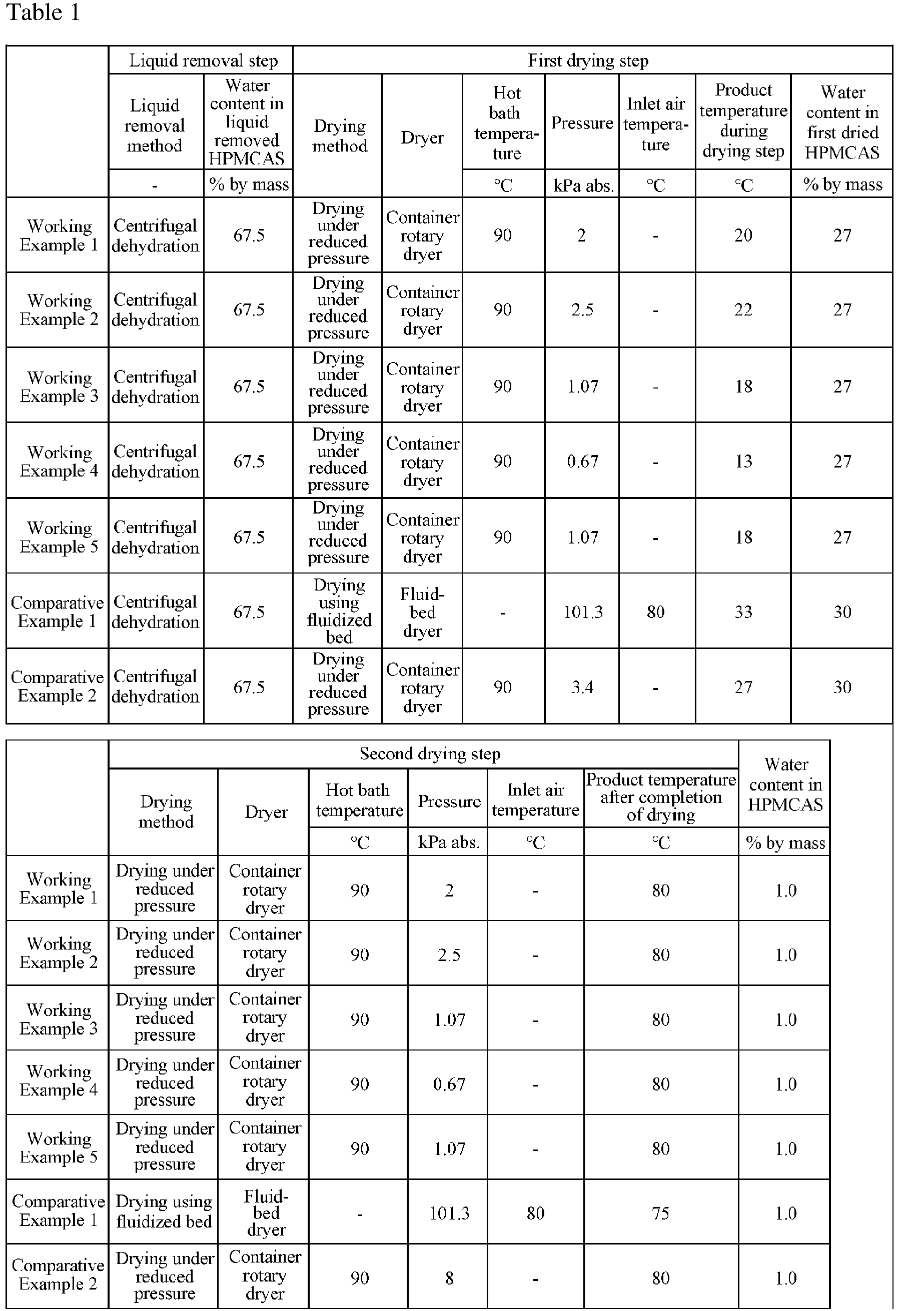

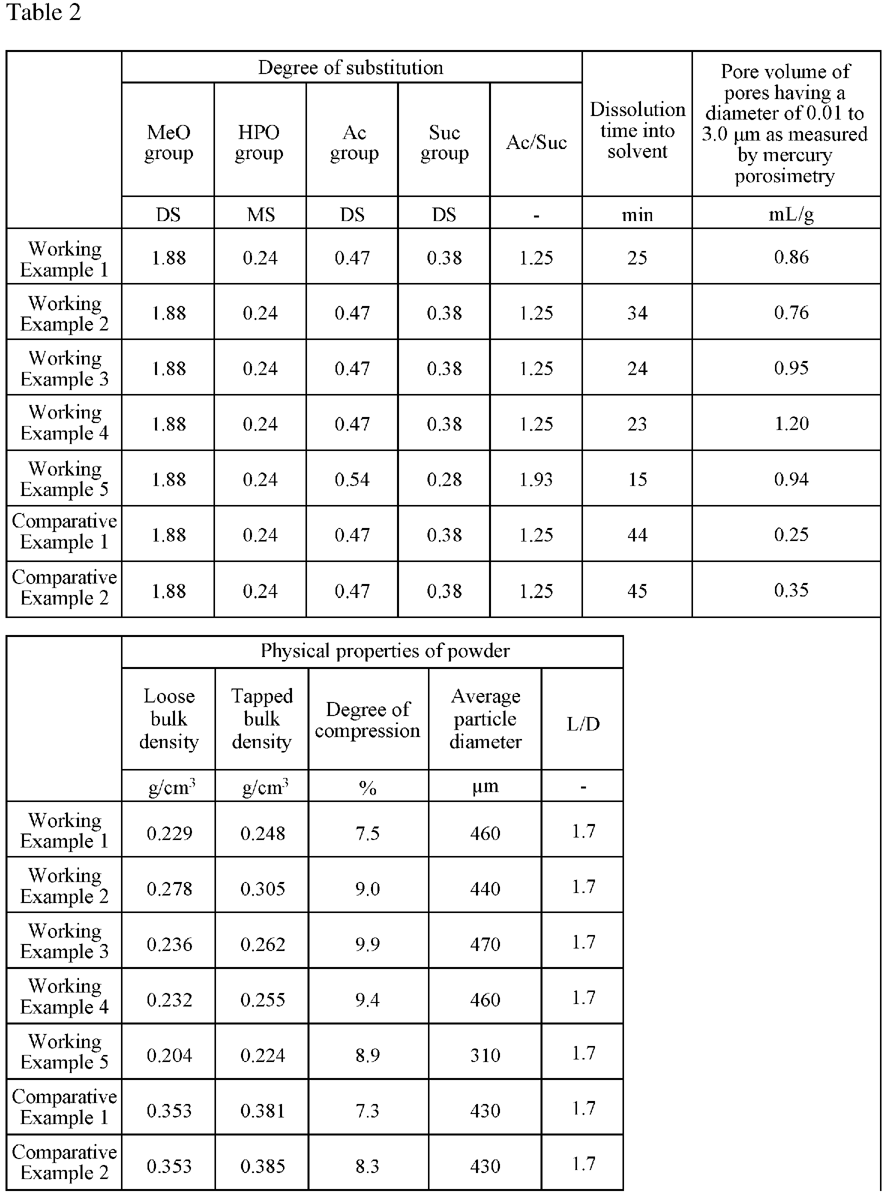

The results as shown in Working examples 1 to 4 and Comparative examples 1 and 2 indicate favorable dissolution rates of HPMCAS into a solvent when the HPMCAS was obtained by a method including a first drying step of drying the product under reduced pressure while keeping the product temperature above 0°C and lower than or equal to 25°C to obtain a first dried HPMCAS having a water content above 0% and lower than or equal to 30%, and a second step of further drying the first dried HPMCAS. Particularly, the HPMCAS indicated an enhanced dissolution rate into a solvent when the product was dried under reduced pressure while keeping the product temperature above 0°C and lower than or equal to 20°C in the first drying step.

The results of Working Example 5 demonstrate the technical knowledge that HPMCAS with different degrees of substitution is comparably effective as well.

## Claims

1. A method for producing hydroxypropyl methylcellulose acetate succinate comprising:
1) a liquid removal step of
a) allowing hydroxypropyl methylcellulose, an acetylating agent, and a succinoylating agent to react with each other in the presence of a catalyst to produce a reaction solution,
b) mixing water with the reaction solution to obtain a suspension of hydroxypropyl methylcellulose acetate succinate, and
c) removing liquid from the suspension of hydroxypropyl methylcellulose acetate succinate to obtain liquid-removed hydroxypropyl methylcellulose acetate succinate;
2) a first drying step of drying the liquid-removed hydroxypropyl methylcellulose acetate succinate under reduced pressure until it reaches a water content above 0% by mass and lower than or equal to 30% by mass while maintaining the product temperature above 0°C and lower than or equal to 25°C to obtain first dried hydroxypropyl methylcellulose acetate succinate; and
3) a second drying step of further drying the first dried hydroxypropyl methylcellulose acetate succinate to obtain hydroxypropyl methylcellulose acetate succinate.

2. The method according to claim 1, wherein the first drying step 2) is performed inside a dryer under a pressure of 0.5 to 3 kPa abs.

3. The method according to claim 1 or 2, wherein the first drying step 2) is performed inside a dryer whose heating temperature is set at 50 to 120°C.

4. The method according to any one of claims 1 to 3, wherein the first drying step 2) is performed using a dryer selected from a container rotary dryer, an internally stirring dryer, and a vibration dryer.

5. The method according to any one of claims 1 to 4, wherein the liquid-removed hydroxypropyl methylcellulose acetate succinate immediately before being subjected to the first drying step 2) has a water content of 40 to 80% by mass.

6. The method according to any one of claims 1 to 5, wherein the hydroxypropyl methylcellulose acetate succinate has a water content above 0% by mass and lower than or equal to 5% by mass.

7. The method according to any one of claims 1 to 6, wherein the hydroxypropyl methylcellulose acetate succinate has a product temperature of 60 to 120°C when the second drying step 3) is completed.

8. A hydroxypropyl methylcellulose acetate succinate comprising pores each having a diameter of 0.01 to 3.0 µm, wherein said pores have a pore volume of 0.5 to 2.0 mL/g as measured by mercury porosimetry.
